# EUROPEAN PATENT APPLICATION

(11) **EP 3 035 155 A1**
(43) Date of publication of application: **22.06.2016**
(21) Application number: 13891343.9
(22) Date of filing: 14.08.2013
(51) Int. Cl.: G06F 3/01

(54) **WEARABLE DEVICE AND DATA TRANSMISSION METHOD**

(71) Applicant: Yulong Computer Telecommunication Scientific (Shenzhen) Co. Ltd., Shenzhen, Guangdong 518057 (CN)
(72) Inventor: LIU, Yan, Shenzhen Guangdong 518057 (CN); WU, Chiqiang, Shenzhen Guangdong 518057 (CN); XIA, Jing, Shenzhen Guangdong 518057 (CN)
(74) Representative: Johnson, Richard Alan
(86) International application number: PCT/CN2013/081491
(87) International publication number: WO 2015/021624

(57) **Abstract**

Provided is a wearable device, including: a parameter acquisition module, used to obtain a real-time status parameter of the wearable device; a scenario determining module, used to determine, according to the real-time status parameter, a scenario in which the wearable device currently locates; and a body capacitive coupling transmission module, used to send data to other electronic devices and/or receive data from other electronic devices when the wearable device locates in a preset data interaction scenario. Further provided is a data transmission method. With the technical solutions of the present invention, by scenario detection, the wearable device can perform data transmission and interaction with other electronic devices by means of the body capacitive coupling technology, so that the characteristics of the wearable device can be fully utilized, and the data transmission process gets more intelligent and humanized.

## Description

### FIELD OF THE INVENTION

The disclosure relates to a field of data transmission technology, and particularly to, a wearable device and a data transmission method.

### BACKGROUND OF THE INVENTION

Various companies begin to design and produce smart wearable devices, such as a smart watch, a smart glass, a smart shoe, etc. These smart wearable devices can combine the usual things worn on a user such as traditional watches, glasses, shoes, etc. with intelligent technical means such as information transmission, check, search, etc. It can make the user take fewer loads and spend less study cost to enjoy the convenience brought by the technology in usual life. For example, the user can check received messages or send E-mails on a smart watch or other wearable devices instead of using a cell phone.

The wearable device may have its own characteristics, e.g., the wearable device may be worn on the user's arm, touching the user's skin, and may change the position in space with the user's movement. However, in relevant technology, the wearable device may still be taken as a normal terminal device; obviously, this is unbeneficial for the user to use the wearable device.

Therefore, how to fully make use of the own characteristics of the wearable device, to realize a convenient and rapid data transmission process, may be a current technical problem to be solved.

### SUMMARY OF THE INVENTION

Based on the above problem, embodiments of the present disclosure provide a new technology of data transmission, in which the wearable device can detect the scenario and use the body capacitive coupling technology to perform data transmission and interaction with other electronic devices, so that the characteristics of the wearable device can be fully utilized, and the data transmission process can get more intelligent and humanized.

Herein, an embodiment of the present disclosure can provide a wearable device, including: a parameter acquisition module, configured for acquiring a real-time status parameter of the wearable device; a scenario determining module, configured for determining, according to the real-time status parameter, a scenario in which the wearable device is currently located; and a body capacitive coupling transmission module, configured for sending data to other electronic devices and/or receive data from other electronic devices when the wearable device is in a preset data interaction scenario.

In the technical solution, since the wearable device is worn on the user, the real-time status parameter may be changed with the user's movement, when the real-time status parameter of the wearable device is obtained, the user's movement can be indirectly detected, and whether the current scenario is a demanded scenario in which performing data transmission can be determined, therefore the intelligent judgment for the scenario can be realized. Meantime, since the wearable device can directly have touch with the user's skin, and the human body can be capacitive and suitable for transmission of data signal, the data transmission, using the body capacitive coupling transmission module, taking the human body as a transmission pathway, between the wearable device and the other electronic devices (which can be a wearable device or other electronic device, but should support the function of the body capacitive coupling transmission) can be realized. Specifically, e.g., the user handshake can be detected according to the real-time status parameter, when the handshake happens, the data interaction scenario can be determined, and the data transmission can be performed by the body capacitive coupling transmission module.

In the above technical solution, preferably, the real-time status parameter includes at least one or any combination of: a shake frequency, a shake amplifier, a shake times, a shake holding time.

In a technical solution, e.g., for the handshake, when the handshake happens between users, the movement in vertical, level, etc. direction or the movement forward and backward may be created; to avoid other shake interference, the frequency, amplifier, etc. of the shake can be detected, and thus the correction of detection can be strengthened.

In the above technical solution, preferably, the wearable device further includes: a switch state setting module, configured for setting the body capacitive coupling transmission module to an opening state when the wearable device in the preset data interaction scenario is determined.

In the technical solution, by determining the scenario, such as in a preset data interaction scenario, the wearable device can automatically enable the body capacitive coupling transmission module to transmit data. It can be certain that for reducing the scenario misjudgment, and for avoiding unnecessary waste of the circuit when the body capacitive coupling transmission module is unnecessary to be enabled, the body capacitive coupling transmission module can be manually enabled, when the data transmission is confirmed by the user based on the body capacitive coupling transmission technology. When the wearable device detects a preset data interaction scenario, the specific data transmission process can be performed.

In the above technical solution, preferably further including: a data storage module, configured for storing the data from the other electronic devices to a preset target path or a target path corresponding to data type of the data.

In the technical solution, the data received by the body capacitive coupling transmission module can be individually stored into a certain directory path, which can be convenient for the user to check and process the data in this part. Preferably, the received different types of data can be further stored in classification, for example, the received data may include identifier, text file, image file, audio or video file. For the convenience of user management, the wearable device can automatically indentify and store the received data in classification.

Meanwhile, the directory path used to store the data can be a storage in the wearable device of its own, can be another storage (wired or wireless) connected with the wearable device, such as a storage in a terminal of a cell phone, a panel computer, a portable computer, etc., and can also be a network storage corresponding to the wearable device, the wearable device directly transmitting the received data to the network memory in wireless local area network or wireless mobile communication network.

In the above technical solution, preferably, the wearable device further includes: an identity authentication module, configured for performing identity-match authentication between the wearable device and the other electronic devices; and a permission control module, configured for allowing the body capacitive coupling transmission module to perform data transmission with the other electronic devices when the other electronic devices pass the identity-match authentication; when the other electronic devices fail to pass the identity-match authentication, forbidding the body capacitive coupling transmission module to perform data transmission with the other electronic devices, or only allowing the body capacitive coupling transmission module to send data to the other electronic devices or receive data from the other electronic devices.

In the technical solution, to avoid malicious attack from other electronic device, identity-match authentication can be performed on the other electronic device. Specifically, e.g., the specific type of the other electronic devices can be determined according to a preset authentication algorithm; or identity information of belonged user can be transmitted mutually, such as user card information. For the wearable device, it can search for a matched user card in its own local or network address list, wherein if the matched user card is included, the identity authentication can be passed.

The data transmission would be forbidden when the identity authentication is failed. Therefore it can be strictly controlled to avoid the user private information stored in the wearable device to be stolen, and also to avoid the received malicious program to cause the user data to be stolen or sabotaged.

The data reception would be allowed when the identity authentication is failed; therefore, at one side, the data information leakage in the wearable device can be avoided, at the other side, storage, check, or the like operation can be performed on the data received from other electronic devices, which is beneficial for the data and information interaction. In this case, even if the way for identity authentication set by the user is far away strict (e.g. must be user information of other electronic devices existed in the address list), for a first-met user, the data of user card, identity information, etc. on demanded by the user can also be obtained, and the interaction delay between the users can be avoided.

In the above technical solution, preferably, the identity authentication module is further configured for: utilizing the body capacitive coupling transmission module to send a first message containing an identifier of the wearable device and receiving a second message containing identifiers of the other electronic devices, and utilizing the body capacitive coupling transmission module to return a response message of the second message and receiving a response message of the first message from the other electronic devices.

In the technical solution, a specific information interaction process of identity-match authentication is described. Wherein, the identifier of the wearable device can be the one of its own, such as a string of code standing for the device; it can also be an identifier of a user who wears the device, e.g., identifier information such as a user card. The security and privacy of information interaction can be strengthened by the identity-match authentication between the devices.

In the above technical solution, preferably, he permission control module is further configured for: when the other electronic devices pass the identity-match authentication, calculating interaction times and/or frequency with the other electronic devices, and according to a numerical interval in which the interaction times and/or frequency is located, allowing the body capacitive coupling transmission module to send a data corresponding to the numerical interval to the other electronic devices.

In the technical solution, for the other electronic devices which perform the data interaction by the body capacitive coupling transmission module every time, the wearable device can record them. E.g., the interaction times and/or frequency with the other electronic devices can be recorded. When the times and/or frequency is relatively low, it indicates that interaction between the user of the transmission device and the user of the other electronic devices is relatively low; when the times and/or frequency is relatively high, it indicates that the interaction between the user of the transmission device and the user of the other electronic devices is intimate, and the data with relatively high intimacy level can be allowed to transmit.

Specifically, the intimacy level of data can be set by manufacturer or user, and the corresponding relationship can exist between each intimacy level and the times and/or frequency. In this way, according to the interaction times and/or frequency between each other electronic devices and the wearable device, the allowable sent data can be determined. Moreover, e.g., the intimacy level can be set for a single type of file; the intimacy level of the user card information can be set at bottom, while the intimacy level of a certain contactor's user card information can be set at top. The intimacy level can also be set for each type of files according to file type, e.g., the intimacy level of all name card information can be set as level 3, the intimacy level of all audio files can be set as level 1 (lower that 3), the intimacy level of all the image files can be set as level 2 and so on. The intimacy level can also be set according to the application program which the file belongs to, e.g., the intimacy level of the application program of the "address list" can be ranked at top, and the intimacy level of the application program of the "music player" can be ranked at bottom.

In the above technical solution, preferably, the permission control module is further configured for: when the other electronic devices pass the identity-match authentication, obtaining user identity information of the other electronic devices from the data sent by the other electronic devices, according to the user identity information, determining an intimacy level between users of the other electronic devices and the user of the wearable device, and allowing the body capacitive coupling transmission module to send a data corresponding to the intimacy level to the other electronic devices.

In the technical solution, user identity information of other electronic devices can be user card information, such as name, phone number, mail address, social network ID, etc. Based on that, the wearable device can check if the user of the other electronic devices is already known, e.g., searching a matched corresponding address list, friend list in social network application, etc.; meanwhile, by searching the call record, inbox, chat record, etc., the contact times and/or frequency with the user can be judged, and according to the value of the times and/or frequency, the intimacy level of the user can be determined. Wherein, it can be obvious that the larger of the value of the times and/or frequency, the higher of the intimacy level.

In the above technical solution, preferably, the permission control module is further configured for: checking a group which the users of the other electronic devices belong to in a user address list of the wearable device, and allowing the body capacitive coupling transmission module to send a data corresponding to the group to the other electronic devices; and/or checking a communication record of the user of the wearable device, and determining a numerical interval of communication times and/or communication frequency between the users of the other electronic devices and the user of the wearable device, and allowing the body capacitive coupling transmission module to send a data corresponding to the numerical interval to the other electronic devices.

In the technical solution, in one condition, allowable sent data corresponding to the different contact groups in address list can be preset, i.e. according to the group therein the user of the other electronic devices currently interacted, the allowable transmitted data can be determined; in another condition, by the call record being searched, the connect times and/or frequency with the user can be judged, and according to the value of times and/or frequency, the intimacy level of the user can be determined. Wherein, the communication record can specifically include such as call record, inbox, chat record, etc. It can be obvious that the larger of the value of the times and/or frequency, the higher of the intimacy level.

Embodiments of the present invention can also provide a data transmission method, which may include: determining, according to an acquired real-time status parameter of a wearable device, a scenario in which the wearable device is currently located; and sending data to other electronic devices and/or receiving data from other electronic devices by an body capacitive coupling transmission module contained in the wearable device when the wearable device is in a preset data interaction scenario.

In the technical solution, since the wearable device is worn on the user, the real-time status parameter may be changed with the user's movement, when the real-time status parameter of the wearable device is obtained, the user's movement can be indirectly detected, and whether the current scenario is a demanded scenario in which performing data transmission can be determined, therefore the intelligent judgment for the scenario can be realized. Meantime, since the wearable device can directly have touch with the user's skin, and the human body can be capacitive and suitable for transmission of data signal, the data transmission, using the body capacitive coupling transmission module, taking the human body as a transmission pathway, between the wearable device and the other electronic devices (which can be a wearable device or other electronic device, but should support the function of the body capacitive coupling transmission) can be realized. Specifically, e.g., the user handshake can be detected according to the real-time status parameter, when the handshake happens, the data interaction scenario can be determined, and the data transmission can be performed by the body capacitive coupling transmission module.

In the above technical solution, preferably, the real-time status parameter includes at least one or any combination of: a shake frequency, a shake amplifier, a shake times, a shake holding time.

In a technical solution, e.g., for the handshake, when the handshake happens between users, the movement in vertical, level, etc. direction or the movement forward and backward may be created; to avoid other shake interference, the frequency, amplifier, etc. of the shake can be detected, and thus the correction of detection can be strengthened.

In the above technical solution, preferably, when the wearable device in the preset data interaction scenario is determined, the wearable device sets the body capacitive coupling transmission module to an opening state.

In the technical solution, by determining the scenario, such as in a preset data interaction scenario, the wearable device can automatically enable the body capacitive coupling transmission module to transmit data. It can be certain that for reducing the scenario misjudgment, and for avoiding unnecessary waste of the circuit when the body capacitive coupling transmission module is unnecessary to be enabled, the body capacitive coupling transmission module can be manually enabled, when the data transmission is confirmed by the user based on the body capacitive coupling transmission technology. When the wearable device detects a preset data interaction scenario, the specific data transmission process can be performed.

In the above technical solution, preferably, the wearable device stores the data from the other electronic devices to a preset target path or a target path corresponding to data type of the data.

In the technical solution, the data received by the body capacitive coupling transmission module can be individually stored into a certain directory path, which can be convenient for the user to check and process the data in this part. Preferably, the received different types of data can be further stored in classification, for example, the received data may include identifier, text file, image file, audio or video file. For the convenience of user management, the wearable device can automatically indentify and store the received data in classification.

Meanwhile, the directory path used to store the data can be a storage in the wearable device of its own, can be another storage (wired or wireless) connected with the wearable device, such as a storage in a terminal of a cell phone, a panel computer, a portable computer, etc., and can also be a network storage corresponding to the wearable device, the wearable device directly transmitting the received data to the network memory in wireless local area network or wireless mobile communication network.

In the above technical solution, preferably, the method further includes: performing identity-match authentication between the wearable device and the other electronic devices; the wearable device allowing the body capacitive coupling transmission module to perform data transmission with the other electronic devices when the other electronic devices pass the identity-match authentication; and when the other electronic devices fail to pass the identity-match authentication, forbidding the body capacitive coupling transmission module to perform data transmission with the other electronic devices, or only allowing the body capacitive coupling transmission module to send data to the other electronic devices or receive data from the other electronic devices.

In the technical solution, to avoid malicious attack from other electronic device, identity-match authentication can be performed on the other electronic device. Specifically, e.g., the specific type of the other electronic devices can be determined according to a preset authentication algorithm; or identity information of belonged user can be transmitted mutually, such as user card information. For the wearable device, it can search for a matched user card in its own local or network address list, wherein if the matched user card is included, the identity authentication can be passed.

The data transmission would be forbidden when the identity authentication is failed. Therefore it can be strictly controlled to avoid the user private information stored in the wearable device to be stolen, and also to avoid the received malicious program to cause the user data to be stolen or sabotaged.

The data reception would be allowed when the identity authentication is failed; therefore, at one side, the data information leakage in the wearable device can be avoided, at the other side, storage, check, or the like operation can be performed on the data received from other electronic devices, which is beneficial for the data and information interaction. In this case, even if the way for identity authentication set by the user is far away strict (e.g. must be user information of other electronic devices existed in the address list), for a first-met user, the data of user card, identity information, etc. on demanded by the user can also be obtained, and the interaction delay between the users can be avoided.

In the above technical solution, preferably, the step of performing identity-match authentication between the wearable device and the other electronic devices includes: utilizing the body capacitive coupling transmission module to send a first message containing an identifier of the wearable device and receiving a second message containing identifiers of the other electronic devices; and utilizing the body capacitive coupling transmission module to return a response message of the second message and receiving a response message of the first message from the other electronic devices.

In the technical solution, a specific information interaction process of identity-match authentication is described. Wherein, the identifier of the wearable device can be the one of its own, such as a string of code standing for the device; it can also be an identifier of a user who wears the device, e.g., identifier information such as a user card. The security and privacy of information interaction can be strengthened by the identity-match authentication between the devices.

In the above technical solution, preferably, the method further includes: when the other electronic devices pass the identity-match authentication, calculating interaction times and/or frequency with the other electronic devices, and according to a numerical interval in which the interaction times and/or frequency is located, allowing the body capacitive coupling transmission module to send a data corresponding to the numerical interval to the other electronic devices.

In the technical solution, for the other electronic devices which perform the data interaction by the body capacitive coupling transmission module every time, the wearable device can record them. E.g., the interaction times and/or frequency with the other electronic devices can be recorded. When the times and/or frequency is relatively low, it indicates that interaction between the user of the transmission device and the user of the other electronic devices is relatively low; when the times and/or frequency is relatively high, it indicates that the interaction between the user of the transmission device and the user of the other electronic devices is intimate, and the data with relatively high intimacy level can be allowed to transmit.

Specifically, the intimacy level of data can be set by manufacturer or user, and the corresponding relationship can exist between each intimacy level and the times and/or frequency. In this way, according to the interaction times and/or frequency between each other electronic devices and the wearable device, the allowable sent data can be determined. Moreover, e.g., the intimacy level can be set for single type of file, and the intimacy level of the user card information can be set at bottom, while the intimacy level of a certain contactor's user card information can be set at top. The intimacy level can also be set for each type of files according to file type, e.g., the intimacy level of all name card information can be set as level 3, the intimacy level of all audio files can be set as level 1 (lower that 3), the intimacy level of all the image files can be set as level 2 and so on. The intimacy level can also be set according to the application program which the file belongs to, e.g., the intimacy level of the application program of the "address list" can be ranked at top, and the intimacy level of the application program of the "music player" can be ranked at bottom.

In the above technical solution, preferably, the method further includes: when the other electronic devices pass the identity-match authentication, obtaining user identity information of the other electronic devices from the data sent by the other electronic devices, according to the user identity information; and determining an intimacy level between users of the other electronic devices and the user of the wearable device, and allowing the body capacitive coupling transmission module to send a data corresponding to the intimacy level to the other electronic devices.

In the technical solution, user identity information of other electronic devices can be user card information, such as name, phone number, mail address, social network ID, etc. Based on that, the wearable device can check if the user of the other electronic devices is already known, e.g., searching a matched corresponding address list, friend list in social network application, etc.; meanwhile, by searching the call record, inbox, chat record, etc., the contact times and/or frequency with the user can be judged, and according to the value of the times and/or frequency, the intimacy level of the user can be determined. Wherein, it can be obvious that the larger of the value of the times and/or frequency, the higher of the intimacy level.

In the above technical solution, preferably, the method further includes: checking a group which the users of the other electronic devices belong to in a user address list of the wearable device, and allowing the body capacitive coupling transmission module to send a data corresponding to the group to the other electronic devices; and/or checking a communication record of the user of the wearable device, and determining a numerical interval of communication times and/or communication frequency between the users of the other electronic devices and the user of the wearable device, and allowing the body capacitive coupling transmission module to send a data corresponding to the numerical interval to the other electronic devices.

In the technical solution, in one condition, allowable sent data corresponding to the different contact groups in address list can be preset, i.e. according to the group therein the user of the other electronic devices currently interacted, the allowable transmitted data can be determined; in another condition, by the call record being searched, the connect times and/or frequency with the user can be judged, and according to the value of times and/or frequency, the intimacy level of the user can be determined. Wherein, the communication record can specifically include such as call record, inbox, chat record, etc. It can be obvious that the larger of the value of the times and/or frequency, the higher of the intimacy level.

Based on the technical solutions described above, by scenario detection, the wearable device can perform data transmission and interaction with other electronic devices by means of the body capacitive coupling technology, so that the characteristics of the wearable device can be fully utilized, and the data transmission process gets more intelligent and humanized.

### BRIEF DESCRIPTION OF THE DRAWINGS

FIG. 1 shows a structure schematic diagram of a wearable device according to an embodiment of present disclosure.
FIG. 2 shows a schematic diagram of data transmission among multiple wearable devices according to an embodiment of present disclosure.
FIG. 3 shows a flowchart of a data transmission method according to an embodiment of present disclosure.
FIG. 4 shows a flowchart of a data transmission method according to another embodiment of present disclosure.

### DETAILED DESCRIPTION OF ILLUSTRATED EMBODIMENTS

For above purposes, features and advantages clearly understood, further description of present disclosure will be illustrated clearly and completely, which combined with embodiments in drawings and detailed embodiments. It should be noted that embodiments and features in embodiments of present disclosure can be combined without conflict.

Multiple specific details would be illustrated in the descriptions below for fully understand of present disclosure, however, other embodiments of present disclosure which differ from the descriptions herein can also be implemented. Therefore, the scope of present disclosure may not be limited due to the embodiments disclosed below.

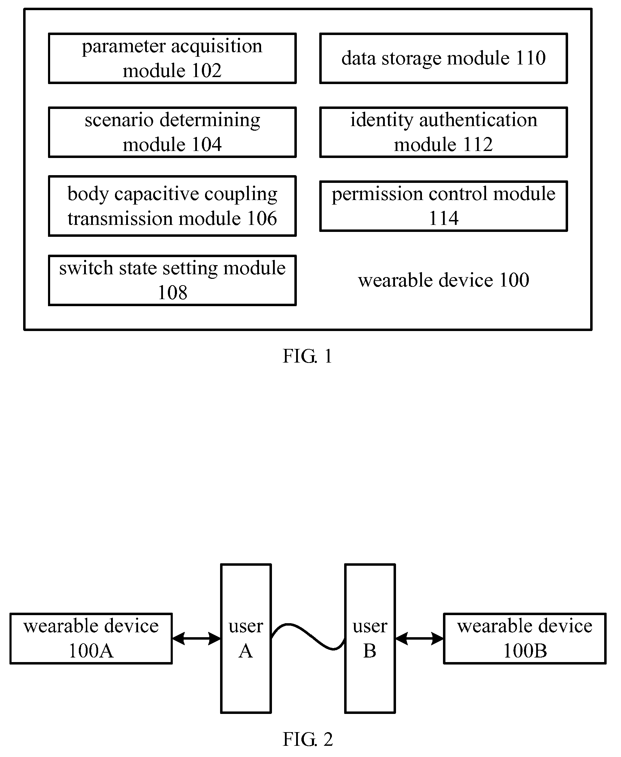

FIG. 1 shows a structure schematic diagram of a wearable device according to an embodiment of present disclosure.

As shown in FIG. 1, the wearable device 100 according to an embodiment of the present disclosure includes: a parameter acquisition module 102, configured for acquiring a real-time status parameter of the wearable device 100; a scenario determining module 104, configured for determining, according to the real-time status parameter, a scenario in which the wearable device 100 is currently located; and a body capacitive coupling transmission module 106, configured for sending data to other electronic devices and/or receive data from other electronic devices when the wearable device 100 is in a preset data interaction scenario.

In the technical solution, since the wearable device 100 is worn on the user, the real-time status parameter may be changed with the user's movement, when the real-time status parameter of the wearable device 100 is obtained, the user's movement can be indirectly detected, and whether the current scenario is a demanded scenario in which performing data transmission can be determined, therefore the intelligent judgment for the scenario can be realized. Meantime, since the wearable device 100 can directly have touch with the user's skin, and the human body can be capacitive and suitable for transmission of data signal, the data transmission, using the body capacitive coupling transmission module 106, taking the human body as a transmission pathway, between the wearable device 100 and the other electronic devices (which can be a wearable device 100 or other electronic device, but should support the function of the body capacitive coupling transmission) can be realized. Specifically, e.g., the user handshake can be detected according to the real-time status parameter, when the handshake happens, the data interaction scenario can be determined, and the data transmission can be performed by the body capacitive coupling transmission module 106.

In the above technical solution, preferably, the real-time status parameter includes at least one or any combination of: a shake frequency, a shake amplifier, a shake times, a shake holding time.

In a technical solution, e.g., for the handshake, when the handshake happens between users, the movement in vertical, level, etc. direction or the movement forward and backward may be created; to avoid other shake interference, the frequency, amplifier, etc. of the shake can be detected, and thus the correction of detection can be strengthened.

In the above technical solution, preferably, the wearable device further includes: a switch state setting module 108, configured for setting the body capacitive coupling transmission module 106 to an opening state when the wearable device 100 in the preset data interaction scenario is determined.

In the technical solution, by determining the scenario, such as in a preset data interaction scenario, the wearable device 100 can automatically enable the body capacitive coupling transmission module 106 to transmit data. It can be certain that for reducing the scenario misjudgment, and for avoiding unnecessary waste of the circuit when the body capacitive coupling transmission module 106 is unnecessary to be enabled, the body capacitive coupling transmission module 106 can be manually enabled, when the data transmission is confirmed by the user based on the body capacitive coupling transmission technology. When the wearable device 100 detects a preset data interaction scenario, the specific data transmission process can be performed.

In the above technical solution, preferably, the method further includes: a data storage module 110, configured for storing the data from the other electronic devices to a preset target path or a target path corresponding to data type of the data.

In the technical solution, the data received by the body capacitive coupling transmission module 106 can be individually stored into a certain directory path, which can be convenient for the user to check and process the data in this part. Preferably, the received different types of data can be further stored in classification, for example, the received data may include identifier, text file, image file, audio or video file. For the convenience of user management, the wearable device 100 can automatically indentify and store the received data in classification.

Meanwhile, the directory path used to store the data can be a storage in the wearable device 100 of its own, can be another storage (wired or wireless) connected with the wearable device 100, such as a storage in a terminal of a cell phone, a panel computer, a portable computer, etc., and can also be a network storage corresponding to the wearable device 100, the wearable device 100 directly transmitting the received data to the network memory in wireless local area network or wireless mobile communication network.

In the above technical solution, preferably, the wearable device further includes: an identity authentication module 112, configured for performing identity-match authentication between the wearable device and the other electronic devices; and a permission control module 114, configured for allowing the body capacitive coupling transmission module 106 to perform data transmission with the other electronic devices when the other electronic devices pass the identity-match authentication; when the other electronic devices fail to pass the identity-match authentication, forbidding the body capacitive coupling transmission module 106 to perform data transmission with the other electronic devices, or only allowing the body capacitive coupling transmission module 106 to send data to the other electronic devices or receive data from the other electronic devices.

In the technical solution, to avoid malicious attack from other electronic device, identity-match authentication can be performed on the other electronic device. Specifically, e.g., the specific type of the other electronic devices can be determined according to a preset authentication algorithm; or identity information of belonged user can be transmitted mutually, such as user card information. For the wearable device 100, it can search for a matched user card in its own local or network address list, wherein if the matched user card is included, the identity authentication can be passed.

The data transmission would be forbidden when the identity authentication is failed. Therefore it can be strictly controlled to avoid the user private information stored in the wearable device to be stolen, and also to avoid the received malicious program to cause the user data to be stolen or sabotaged.

The data reception would be allowed when the identity authentication is failed; therefore, at one side, the data information leakage in the wearable device 100 can be avoided, at the other side, storage, check, or the like operation can be performed on the data received from other electronic devices, which is beneficial for the data and information interaction. In this case, even if the way for identity authentication set by the user is far away strict (e.g. must be user information of other electronic devices existed in the address list), for a first-met user, the data of user card, identity information, etc. on demanded by the user can also be obtained, and the interaction delay between the users can be avoided.

In the above technical solution, preferably, the identity authentication module 112 is further configured for: utilizing the body capacitive coupling transmission module 106 to send a first message containing an identifier of the wearable device 100 and receiving a second message containing identifiers of the other electronic devices, and utilizing the body capacitive coupling transmission module 106 to return a response message of the second message and receiving a response message of the first message from the other electronic devices.

In the technical solution, a specific information interaction process of identity-match authentication is described. Wherein, the identifier of the wearable device 100 can be the one of its own, such as a string of code standing for the device; it can also be an identifier of a user who wears the device, e.g., identifier information such as a user card. The security and privacy of information interaction can be strengthened by the identity-match authentication between the devices.

In the above technical solution, preferably, the permission control module 114 is further configured for: when the other electronic devices pass the identity-match authentication, calculating interaction times and/or frequency with the other electronic devices, and according to a numerical interval in which the interaction times and/or frequency is located, allowing the body capacitive coupling transmission module 106 to send a data corresponding to the numerical interval to the other electronic devices.

In the technical solution, for the other electronic devices which perform the data interaction by the body capacitive coupling transmission module 106 every time, the wearable device 100 can record them. E.g., the interaction times and/or frequency with the other electronic devices can be recorded. When the times and/or frequency is relatively low, it indicates that interaction between the user of the transmission device and the user of the other electronic devices is relatively low; when the times and/or frequency is relatively high, it indicates that the interaction between the user of the transmission device and the user of the other electronic devices is intimate, and the data with relatively high intimacy level can be allowed to transmit.

Specifically, the intimacy level of data can be set by manufacturer or user, and the corresponding relationship can exist between each intimacy level and the times and/or frequency. In this way, according to the interaction times and/or frequency between each other electronic devices and the wearable device 100, the allowable sent data can be determined. Moreover, e.g., the intimacy level can be set for single type of file, and the intimacy level of the user card information can be set at bottom, while the intimacy level of a certain contactor's user card information can be set at top. The intimacy level can also be set for each type of files according to file type, e.g., the intimacy level of all name card information can be set as level 3, the intimacy level of all audio files can be set as level 1 (lower that 3), the intimacy level of all the image files can be set as level 2 and so on. The intimacy level can also be set according to the application program which the file belongs to, e.g., the intimacy level of the application program of the "address list" can be ranked at top, and the intimacy level of the application program of the "music player" can be ranked at bottom.

In the above technical solution, preferably, the permission control module 114 is further configured for: when the other electronic devices pass the identity-match authentication, obtaining user identity information of the other electronic devices from the data sent by the other electronic devices, according to the user identity information, determining an intimacy level between users of the other electronic devices and the user of the wearable device 100, and allowing the body capacitive coupling transmission module 106 to send a data corresponding to the intimacy level to the other electronic devices.

In the technical solution, user identity information of other electronic devices can be user card information, such as name, phone number, mail address, social network ID, etc. Based on that, the wearable device 100 can check if the user of the other electronic devices is already known, e.g., searching a matched corresponding address list, friend list in social network application, etc.; meanwhile, by searching the call record, inbox, chat record, etc., the contact times and/or frequency with the user can be judged, and according to the value of the times and/or frequency, the intimacy level of the user can be determined. Wherein, it can be obvious that the larger of the value of the times and/or frequency, the higher of the intimacy level.

In the above technical solution, preferably, the permission control module 114 is further configured for: checking a group which the users of the other electronic devices belong to in a user address list of the wearable device, and allowing the body capacitive coupling transmission module 100 to send a data corresponding to the group to the other electronic devices; and/or checking a communication record of the user of the wearable device, and determining a numerical interval of communication times and/or communication frequency between the users of the other electronic devices and the user of the wearable device 100, and allowing the body capacitive coupling transmission module 106 to send a data corresponding to the numerical interval to the other electronic devices.

In the technical solution, in one condition, allowable sent data corresponding to the different contact groups in address list can be preset, i.e. according to the group therein the user of the other electronic devices currently interacted, the allowable transmitted data can be determined; in another condition, by the call record being searched, the connect times and/or frequency with the user can be judged, and according to the value of times and/or frequency, the intimacy level of the user can be determined. Wherein, the communication record can specifically include such as call record, inbox, chat record, etc. It can be obvious that the larger of the value of the times and/or frequency, the higher of the intimacy level.

FIG. 2 shows a schematic diagram of data transmission among multiple wearable devices according to an embodiment of present disclosure.

As shown in FIG. 2, it can be assumed that user A and user B respectively wear a wearable device 100 shown in FIG. 1. Wherein, it can be assumed that the user A wears the wearable device 100A and the user B wears the wearable device 100B.

Wherein, the body capacitive coupling transmitting module (not shown in this figure, referred to the body capacitive coupling module 106 shown in FIG. 1) is separately set in the wearable device 100A and the wearable device 100B. The said body capacitive coupling transmission technology can be a technology of using the capacity of human body to build a transmission pathway to realize data transmission through body; while the body capacitive transmitting module can be used as a specific hardware equipment to implement the technology.

Specifically, e.g., when the user A wears the wearable device 100A, the wearable device 100A contains a conducting part in touch with the user A's skin, such as a metal panel; meanwhile, the body capacitive coupling transmitting module can be a modified circuit in the wearable device 100A, the modified circuit connecting with the conducting part above. Similarly, the wearable device 100B can contain the above modified circuit, which can be in touch with the user B's skin through the conducting part.

Therefore, when the user A wears the wearable device 100A and the user B wears the wearable device 100B separately, and when the user A and the user B have skin touch, such as handshake, a pathway to transmit data can be formed between the modified circuits in the wearable device 100A and the one in the wearable device 100B.

Specifically, the wearable device 100 (including the wearable device 100A, the wearable device 100B and so on) can combine the traditional wearable things, such as watches, glasses, shoes, etc. with the intelligent technical means; so that the smart watch, smart glasses, smart shoes, etc. can be obtained with function of checking, receiving, sending message, etc. It would be certain that the disclosure can also be applied for the wearable device under development or the wearable device as improvement of the current wearable device, such as smart bracelet, smart wristband, smart hat, smart necklace, etc. Since the wearable device 100 is created based on the traditional things, which would be worn by the user, and may have motion changed with the user's movement; the user's movement can be accurately detected, and when a preset movement has been detected, a preset data interaction scenario would be determined, and the corresponding operation of data transmission can performed. E.g., when a shake over a preset frequency, amplifier, times, and holding time is detected, the operation of "handshake" by the user can be determined, and the data interaction with the other-hand wearable device or other electronic device can be performed.

In the process of interaction, the wearable device would adopt a certain judgment rules, which will be exemplified as below.

(1) For a strange user electronic device, only receiving instead of sending (in body capacitive coupling transmitting), or only sending information in the lowest intimacy level, such as user card information of a user (wearing the wearable device).

(2) When a process of "handshake" is obvious, i.e. when not only a shake is detected, but the shake is relatively severe (one or more parameters of frequency, amplifier, times, etc. are larger or equivalent to a preset parameter threshold), allowing to perform the data interaction.

(3) According to received identifier information of the other user, by searching contact times and/or frequency or the like of the other user in the group, call record of the address list of the user, determining the intimacy level of the other user. Therefore, the corresponding data can be sent according to different intimacy level. E.g., the larger of the value of the intimacy level, the higher of the intimacy level of sent data (the intimacy level for different data needed to be preset by manufacturer or user).

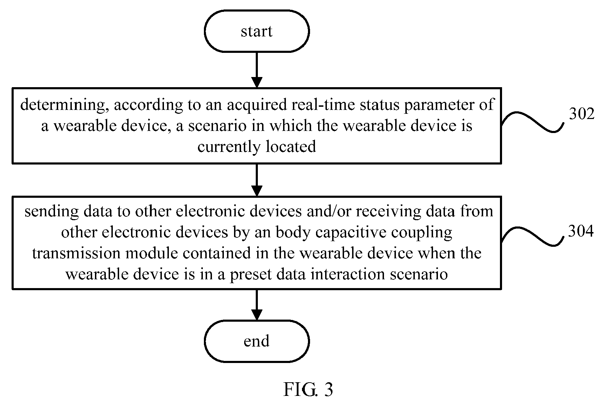

FIG. 3 shows a flowchart of a data transmission method according to an embodiment of present disclosure.

As shown in FIG. 3, the data transmission method according to an embodiment of present disclosure can include: step 302, determining, according to an acquired real-time status parameter of a wearable device, a scenario in which the wearable device is currently located; and step 304, sending data to other electronic devices and/or receiving data from other electronic devices by an body capacitive coupling transmission module contained in the wearable device when the wearable device is in a preset data interaction scenario.

In the technical solution, since the wearable device is worn on the user, the real-time status parameter may be changed with the user's movement, when the real-time status parameter of the wearable device is obtained, the user's movement can be indirectly detected, and whether the current scenario is a demanded scenario in which performing data transmission can be determined, therefore the intelligent judgment for the scenario can be realized. Meantime, since the wearable device can directly have touch with the user's skin, and the human body can be capacitive and suitable for transmission of data signal, the data transmission, using the body capacitive coupling transmitting module, taking the human body as a transmission pathway, between the wearable device and the other electronic device (which can be a wearable device or other electronic device, but should support the function of the body capacitive coupling transmission) can be realized. Specifically, e.g., the user handshake can be detected according to the real-time status parameter, when the handshake happens, the data interaction scenario can be determined, and the data transmission can be performed by the body capacitive coupling transmitting module.

In the above technical solution, preferably, the real-time status parameter includes at least one or any combination of: a shake frequency, a shake amplifier, a shake times, a shake holding time.

In a technical solution, e.g., for the handshake, when the handshake happens between users, the movement in vertical, level, etc. direction or the movement forward and backward may be created; to avoid other shake interference, the frequency, amplifier, etc. of the shake can be detected, and thus the correction of detection can be strengthened.

In the above technical solution, preferably, when the wearable device in the preset data interaction scenario is determined, the wearable device sets the body capacitive coupling transmission module to an opening state.

In the technical solution, by determining the scenario, such as in a preset data interaction scenario, the wearable device can automatically enable the body capacitive coupling transmission module to transmit data. It can be certain that for reducing the scenario misjudgment, and for avoiding unnecessary waste of the circuit when the body capacitive coupling transmission module is unnecessary to be enabled, the body capacitive coupling transmission module can be manually enabled, when the data transmission is confirmed by the user based on the body capacitive coupling transmission technology. When the wearable device detects a preset data interaction scenario, the specific data transmission process can be performed.

In the above technical solution, preferably, the wearable device stores the data from the other electronic devices to a preset target path or a target path corresponding to data type of the data.

In the technical solution, the data received by the body capacitive coupling transmission module can be individually stored into a certain directory path, which can be convenient for the user to check and process the data in this part. Preferably, the received different types of data can be further stored in classification, for example, the received data may include identifier, text file, image file, audio or video file. For the convenience of user management, the wearable device can automatically indentify and store the received data in classification.

Meanwhile, the directory path used to store the data can be a storage in the wearable device of its own, can be another storage (wired or wireless) connected with the wearable device, such as a storage in a terminal of a cell phone, a panel computer, a portable computer, etc., and can also be a network storage corresponding to the wearable device, the wearable device directly transmitting the received data to the network memory in wireless local area network or wireless mobile communication network.

In the above technical solution, preferably, the method further includes: performing identity-match authentication between the wearable device and the other electronic devices; the wearable device allowing the body capacitive coupling transmission module to perform data transmission with the other electronic devices when the other electronic devices pass the identity-match authentication; and when the other electronic devices fail to pass the identity-match authentication, forbidding the body capacitive coupling transmission module to perform data transmission with the other electronic devices, or only allowing the body capacitive coupling transmission module to send data to the other electronic devices or receive data from the other electronic devices.

In the technical solution, to avoid malicious attack from other electronic device, identity-match authentication can be performed on the other electronic device. Specifically, e.g., the specific type of the other electronic devices can be determined according to a preset authentication algorithm; or identity information of belonged user can be transmitted mutually, such as user card information. For the wearable device, it can search for a matched user card in its own local or network address list, wherein if the matched user card is included, the identity authentication can be passed.

The data transmission would be forbidden when the identity authentication is failed. Therefore it can be strictly controlled to avoid the user private information stored in the wearable device to be stolen, and also to avoid the received malicious program to cause the user data to be stolen or sabotaged.

The data reception would be allowed when the identity authentication is failed; therefore, at one side, the data information leakage in the wearable device can be avoided, at the other side, storage, check, or the like operation can be performed on the data received from other electronic devices, which is beneficial for the data and information interaction. In this case, even if the way for identity authentication set by the user is far away strict (e.g. must be user information of other electronic devices existed in the address list), for a first-met user, the data of user card, identity information, etc. on demanded by the user can also be obtained, and the interaction delay between the users can be avoided.

In the above technical solution, preferably, the step of performing identity-match authentication between the wearable device and the other electronic devices includes: utilizing the body capacitive coupling transmission module to send a first message containing an identifier of the wearable device and receiving a second message containing identifiers of the other electronic devices; and utilizing the body capacitive coupling transmission module to return a response message of the second message and receiving a response message of the first message from the other electronic devices.

In the technical solution, a specific information interaction process of identity-match authentication is described. Wherein, the identifier of the wearable device can be the one of its own, such as a string of code standing for the device; it can also be an identifier of a user who wears the device, e.g., identifier information such as a user card. The security and privacy of information interaction can be strengthened by the identity-match authentication between the devices.

In the above technical solution, preferably, the method further includes: when the other electronic devices pass the identity-match authentication, calculating interaction times and/or frequency with the other electronic devices, and according to a numerical interval in which the interaction times and/or frequency is located, allowing the body capacitive coupling transmission module to send a data corresponding to the numerical interval to the other electronic devices.

In the technical solution, for the other electronic devices which perform the data interaction by the body capacitive coupling transmission module every time, the wearable device can record them. For example, the interaction times and/or frequency with the other electronic devices can be recorded. When the times and/or frequency is relatively low, it indicates that interaction between the user of the transmission device and the user of the other electronic devices is relatively low; when the times and/or frequency is relatively high, it indicates that the interaction between the user of the transmission device and the user of the other electronic devices is intimate, and the data with relatively high intimacy level can be allowed to transmit.

Specifically, the intimacy level of data can be set by manufacturer or user, and the corresponding relationship can exist between each intimacy level and the times and/or frequency. In this way, according to the interaction times and/or frequency between each other electronic devices and the wearable device, the allowable sent data can be determined. Moreover, e.g., the intimacy level can be set for a single type of file; the intimacy level of the user card information can be set at bottom, while the intimacy level of a certain contactor's user card information can be set at top. The intimacy level can also be set for each type of files according to file type, e.g., the intimacy level of all name card information can be set as level 3, the intimacy level of all audio files can be set as level 1 (lower that 3), the intimacy level of all the image files can be set as level 2 and so on. The intimacy level can also be set according to the application program which the file belongs to, e.g., the intimacy level of the application program of the "address list" can be ranked at top, the intimacy level of the application program of the "music player" can be ranked at bottom.

In the above technical solution, preferably, the method further includes: when the other electronic devices pass the identity-match authentication, obtaining user identity information of the other electronic devices from the data sent by the other electronic devices, according to the user identity information; and determining an intimacy level between users of the other electronic devices and the user of the wearable device, and allowing the body capacitive coupling transmission module to send a data corresponding to the intimacy level to the other electronic devices.

In the technical solution, user identity information of other electronic devices can be user card information, such as name, phone number, mail address, social network ID, etc. Based on that, the wearable device can check if the user of the other electronic devices is already known, e.g., searching a matched corresponding address list, friend list in social network application, etc.; meanwhile, by searching the call record, inbox, chat record, etc., the contact times and/or frequency with the user can be judged, and according to the value of the times and/or frequency, the intimacy level of the user can be determined. Wherein, it can be obvious that the larger of the value of the times and/or frequency, the higher of the intimacy level.

In the above technical solution, preferably, the method further includes: checking a group which the users of the other electronic devices belong to in a user address list of the wearable device, and allowing the body capacitive coupling transmission module to send a data corresponding to the group to the other electronic devices; and/or checking a communication record of the user of the wearable device, and determining a numerical interval of communication times and/or communication frequency between the users of the other electronic devices and the user of the wearable device, and allowing the body capacitive coupling transmission module to send a data corresponding to the numerical interval to the other electronic devices.

In the technical solution, in one condition, allowable sent data corresponding to the different contact groups in address list can be preset, i.e. according to the group therein the user of the other electronic devices currently interacted, the allowable transmitted data can be determined; in another condition, by the call record being searched, the connect times and/or frequency with the user can be judged, and according to the value of times and/or frequency, the intimacy level of the user can be determined. Wherein, the communication record can specifically include such as call record, inbox, chat record, etc. It can be obvious that the larger of the value of the times and/or frequency, the higher of the intimacy level.

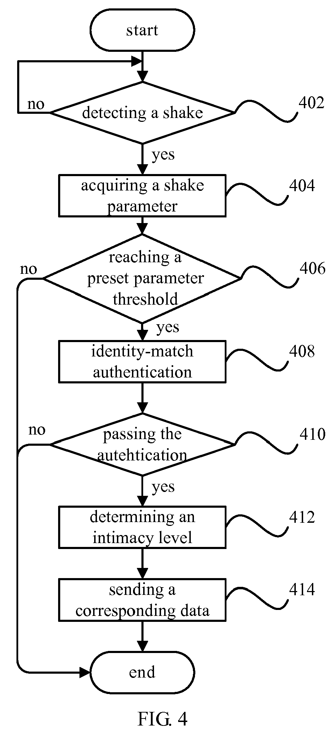

FIG. 4 shows a flowchart of a data transmission method according to another embodiment of present disclosure.

As shown in FIG. 4, taking the smart phone as an example, the schematic flowchart of a data transmission method according to another embodiment of present disclosure at least includes the following steps.

Step 402, judging whether a shake is detected or not; if the shake has been detected, executing step 404, if the shake is not detected, the shake is continuously detected.

Step 404, acquiring a specific shake parameter, such as a shake frequency, a shake amplifier, a shake times, a shake holding time, etc.

Step 406, judging whether the shake parameter reaches a preset parameter threshold or not; if the shake parameter reaches the preset parameter threshold, executing step 408, if the shake parameter does not reach the present parameter threshold, then the step is end.

Specifically, the smart watch worn on the user's wrist may shake with the movement of the user's wrist, arm, etc., if an operation of "handshake" by the user is assumed as a preset data transmission condition, a shake may be created in the process of the user's movement, and some preset parameter thresholds can be set aiming at the character of the operation of "handshake", such as a frequency, an amplifier, a number of times, a holding time, etc. of the happening shake. Therefore, whether a real "handshake" is happened can be confirmed.

Step 408, if the shake parameter reaches the preset parameter threshold, determining that the user executing an operation of "handshake", i.e., when the preset data interaction scenario in which the wearable device is located is confirmed, a smart watch (assumed as a smart watch A) and a smart watch (assumed as a smart watch B, or other wearable devices or un-wearable devices which could support the technology of body capacitive coupling transmission) of an object user who shakes hand with the user are demanded for data interaction.

Before the data interaction, on one side, to avoid attack from malicious user to improve the security of data interaction process, and on the other side, to identify the identity information of the user wearing smart watch B, the smart watch A and the smart watch B can perform identity-match authentication. For example, the two watches can exchange the identifier information of their own, and whether they are devices in secure can be determined with a preset algorithm; or the two watches can exchange the corresponding user identifier information, and search the address list, call record, friend list in social network, communication record in social network, etc., of their own, to confirm the specific identity of the users.

Step 410, determining whether the authentication is passed or not, if the authentication is passed, executing step 412, if the authentication is not passed, the step is end.

Step 412, determining the intimacy level between the users. Specifically, e.g., by searching for the group of address list or friend list in social network of the current user (the one wearing the smart watch A) which the other user (the one wearing the smart watch B) belongs to, or by searching the communication record (call record, in-time communication record, message or inbox of the mail, communication record in social network, etc.) of the current user, the communication times and/or frequency with the other user can be determined, and therefore, the intimacy level between the other user and the current user can be determined.

Step 414, classifying the data of current users according to the intimacy level to form multiple levels of intimacy degree, different levels of intimacy degree corresponding to different intimacy levels. Wherein, the larger of the intimacy level, the higher of the level of the intimacy degree.

When the intimacy level between the other user and the current user is determined, corresponding level of the intimacy degree can be obtained. Therefore, the smart watch A can be allowed to transmit data to the smart watch B, and then the data interaction can be realized.

The technical solutions of present disclosure are detailed illustrated with the combination of the attached figures above, embodiments of the present disclosure provide a wearable device and a data transmission method, in which by scenario detection, the wearable device can perform data transmission and interaction with other electronic devices by means of the body capacitive coupling technology, so that the characteristics of the wearable device can be fully utilized, and the data transmission process gets more intelligent and humanized.

The above descriptions are some exemplary embodiments of the present disclosure, and should not be regarded as limitation to the scope of related claims. A person having ordinary skills in a relevant technical field will be able to make improvements and modifications within the spirit of the principle of the present disclosure. Any modification, equivalent replacement, improvement and so on should also be incorporated in the scope of the claims attached below.

## Claims

1. A wearable device, comprising:
a parameter acquisition module, configured for acquiring a real-time status parameter of the wearable device;
a scenario determining module, configured for determining, according to the real-time status parameter, a scenario in which the wearable device is currently located; and
a body capacitive coupling transmission module, configured for sending data to other electronic devices and/or receive data from other electronic devices when the wearable device is in a preset data interaction scenario.

2. The wearable device according to claim 1, wherein, the real-time status parameter comprises at least one or any combination of:
a shake frequency, a shake amplifier, a shake times, a shake holding time.

3. The wearable device according to claim 1, further comprising:
a switch state setting module, configured for setting the body capacitive coupling transmission module to an opening state when the wearable device in the preset data interaction scenario is determined.

4. The wearable device according to claim 1, further comprising:
a data storage module, configured for storing the data from the other electronic devices to a preset target path or a target path corresponding to data type of the data.

5. The wearable device according to any of claims 1 to 4, further comprising:
an identity authentication module, configured for performing identity-match authentication between the wearable device and the other electronic devices; and
a permission control module, configured for allowing the body capacitive coupling transmission module to perform data transmission with the other electronic devices when the other electronic devices pass the identity-match authentication; when the other electronic devices fail to pass the identity-match authentication, forbidding the body capacitive coupling transmission module to perform data transmission with the other electronic devices, or only allowing the body capacitive coupling transmission module to send data to the other electronic devices or receive data from the other electronic devices.

6. The wearable device according to claim 5, wherein, the identity authentication module is further configured for:
utilizing the body capacitive coupling transmission module to send a first message containing an identifier of the wearable device and receiving a second message containing identifiers of the other electronic devices, and utilizing the body capacitive coupling transmission module to return a response message of the second message and receiving a response message of the first message from the other electronic devices.

7. The wearable device according to claim 5, wherein, the permission control module is further configured for:
when the other electronic devices pass the identity-match authentication, calculating interaction times and/or frequency with the other electronic devices, and according to a numerical interval in which the interaction times and/or frequency is located, allowing the body capacitive coupling transmission module to send a data corresponding to the numerical interval to the other electronic devices.

8. The wearable device according to claim 5, wherein the permission control module is further configured for:
when the other electronic devices pass the identity-match authentication, obtaining user identity information of the other electronic devices from the data sent by the other electronic devices, according to the user identity information, determining an intimacy level between users of the other electronic devices and the user of the wearable device, and allowing the body capacitive coupling transmission module to send a data corresponding to the intimacy level to the other electronic devices.

9. The wearable device according to claim 8, wherein, the permission control module is further configured for:
checking a group which the users of the other electronic devices belong to in a user address list of the wearable device, and allowing the body capacitive coupling transmission module to send a data corresponding to the group to the other electronic devices; and/or
checking a communication record of the user of the wearable device, and determining a numerical interval of communication times and/or communication frequency between the users of the other electronic devices and the user of the wearable device, and allowing the body capacitive coupling transmission module to send a data corresponding to the numerical interval to the other electronic devices.

10. A data transmission method, comprising:
determining, according to an acquired real-time status parameter of a wearable device, a scenario in which the wearable device is currently located; and
sending data to other electronic devices and/or receiving data from other electronic devices by an body capacitive coupling transmission module contained in the wearable device when the wearable device is in a preset data interaction scenario.

11. The data transmission method according to claim 10, wherein, the real-time status parameter comprises at least one or any combination of:
a shake frequency, a shake amplifier, a shake times, a shake holding time.

12. The data transmission method according to claim 10, wherein, when the wearable device in the preset data interaction scenario is determined, the wearable device sets the body capacitive coupling transmission module to an opening state.

13. The data transmission method according to claim 10, wherein the wearable device stores the data from the other electronic devices to a preset target path or a target path corresponding to data type of the data.

14. The data transmission method according to any of claims 10 to 13, further comprising:
performing identity-match authentication between the wearable device and the other electronic devices;
allowing the body capacitive coupling transmission module to perform data transmission with the other electronic devices when the other electronic devices pass the identity-match authentication; and
when the other electronic devices fail to pass the identity-match authentication, forbidding the body capacitive coupling transmission module to perform data transmission with the other electronic devices, or only allowing the body capacitive coupling transmission module to send data to the other electronic devices or receive data from the other electronic devices.

15. The data transmission method according to 14, wherein, the step of performing identity-match authentication between the wearable device and the other electronic devices comprises:
utilizing the body capacitive coupling transmission module to send a first message containing an identifier of the wearable device and receiving a second message containing identifiers of the other electronic devices; and
utilizing the body capacitive coupling transmission module to return a response message of the second message and receiving a response message of the first message from the other electronic devices.

16. The data transmission method according to claim 14, further comprising:
when the other electronic devices pass the identity-match authentication, calculating interaction times and/or frequency with the other electronic devices, and according to a numerical interval in which the interaction times and/or frequency is located, allowing the body capacitive coupling transmission module to send a data corresponding to the numerical interval to the other electronic devices.

17. The data transmission method according to claim 14, further comprising:
when the other electronic devices pass the identity-match authentication, obtaining user identity information of the other electronic devices from the data sent by the other electronic devices, according to the user identity information; and
determining an intimacy level between users of the other electronic devices and the user of the wearable device, and allowing the body capacitive coupling transmission module to send a data corresponding to the intimacy level to the other electronic devices.

18. The data transmission method according to claim 17, further comprising:
checking a group which the users of the other electronic devices belong to in a user address list of the wearable device, and allowing the body capacitive coupling transmission module to send a data corresponding to the group to the other electronic devices; and/or
checking a communication record of the user of the wearable device, and determining a numerical interval of communication times and/or communication frequency between the users of the other electronic devices and the user of the wearable device, and allowing the body capacitive coupling transmission module to send a data corresponding to the numerical interval to the other electronic devices.
